# EUROPÄISCHE PATENTSCHRIFT

(11) **EP 1 963 636 B1**
(45) Veröffentlichungstag und Bekanntmachung des Hinweises auf die Patenterteilung: **17.02.2010**
(21) Anmeldenummer: 06819412.5
(22) Anmeldetag: 13.11.2006
(51) Int. Cl.: F01N 11/00

(54) **VERFAHREN ZUR DIAGNOSE EINES IN EINEM ABGASSTROM ANGEORDNETEN KATALYSATORS UND VORRICHTUNG ZUR DURCHFÜHRUNG DES VERFAHRENS**
METHOD FOR THE DIAGNOSIS OF A CATALYTIC CONVERTER LOCATED IN AN EXHAUST GAS FLOW, AND DEVICE FOR CARRYING OUT SAID METHOD
PROCEDE DE DIAGNOSTIC POUR UN CATALYSEUR PLACE DANS UN FLUX DE GAZ ET DISPOSITIF PERMETTANT LA MISE EN OEUVRE DUDIT PROCEDE

(30) Priorität: 08.12.2005 DE 102005059055
(43) Veröffentlichungstag der Anmeldung: 03.09.2008
(73) Patentinhaber: ROBERT BOSCH GMBH, 70442 Stuttgart (DE)
(72) Erfinder: FRAUHAMMER, Joerg, 74376 Gemmrigheim (DE); MUELLER, Uwe, 74389 Cleebronn (DE)
(86) Internationale Anmeldenummer: PCT/EP2006/068370
(87) Internationale Veröffentlichungsnummer: WO 2007/065770

(56) Entgegenhaltungen:
- EP-A2- 1 291 502
- DE-A1- 4 338 342
- DE-A1- 19 643 674
- DE-A1- 19 928 559
- US-A1- 2003 177 760

## Beschreibung

Die Erfindung geht aus von einem Verfahren zur Diagnose eines in einem Abgasstrom angeordneten Katalysators und von einer Vorrichtung zur Durchführung des Verfahrens nach der Gattung der unabhängigen Ansprüche.

Aus der DE 44 26 020 A1 ist ein Verfahren zur Diagnose eines in einem Abgasstrom angeordneten Katalysators bekannt geworden, welches auf der Bewertung wenigstens einer Temperatur beruht, die von einer im Katalysator gegebenenfalls stattfindenden exothermen Reaktion beeinflusst wird. Die vorbekannte Katalysator-Diagnose wird auf der Grundlage von zwei Temperatursignalen durchgeführt. Das erste Temperatursignal stellt ein Temperatursensor bereit, der stromabwärts nach dem Katalysator angeordnet ist. Das zweite Temperatursignal wird mit einem Temperaturmodell des Katalysators gewonnen. Die beiden Temperatursignale werden in einem vorgegebenen Betriebszustand einer Brennkraftmaschine, in deren Abgasbereich der Katalysator angeordnet ist, miteinander abgeglichen. Die anhand des Temperaturmodells gewonnene Temperatur kann entweder auf der Basis eines vollständig funktionsunfähigen Katalysators, eines vollständig funktionsfähigen Katalysators oder eines so genannten Grenzkatalysators gebildet werden, wobei der Grenzkatalysator eine zwischen diesen extremen liegende Konvertierungsfähigkeit aufweist, bei welcher die gesetzlichen Anforderungen an die Konvertierungsfähigkeit gerade noch erfüllt werden.

Aus der DE 197 51 58 A1 ist ein Verfahren zur Diagnose eines in einem Abgasstrom angeordneten Katalysators bekannt geworden, welches auf der Bewertung von wenigstens einem Maß für die Sauerstoff-Konzentration im Abgas beruht. Ein erstes Maß für die Sauerstoff-Konzentration stellt ein Lambdasensor bereit, der stromabwärts nach dem Katalysator angeordnet ist. Ein zweites Maß für die Sauerstoff-Konzentration stromabwärts nach dem Katalysator wird mit einem Katalysator-Modell gewonnen. Bewertet wird ein Maß für die Differenz zwischen dem gemessenen und dem berechneten Maß. Die Katalysator-Diagnose beruht auf einer Bewertung der Sauerstoff-Speicherfähigkeit eines Katalysators, wobei davon ausgegangen wird, dass ein neuer Katalysator eine höhere Speicherfähigkeit als ein alter Katalysator aufweist. Mit dem vorbekannten Verfahren wird insbesondere die Amplitude des gemessenen Lambdasignals bewertet, die aufgrund von stromaufwärts vor dem Katalysator gezielt vorgegebenen Lambdaänderungen stromabwärts nach dem Katalysator auftritt.

Aus der DE 41 28 823 A1 ist ein weiteres Verfahren zur Diagnose eines in einem Abgasstrom angeordneten Katalysators bekannt geworden, welches auf der Bewertung von wenigstens einem Maß für die Sauerstoff-Konzentration im Abgas beruht. Die Katalysator-Diagnose beruht auf der Ermittlung des Sauerstoff-Speichervermögens des Katalysators. Die Sauerstoff-Speicherfähigkeit wird mit einem Integral ermittelt, welches einen von einer Brennkraftmaschine, in deren Abgasbereich der Katalysator angeordnet ist, angesaugten Luftstrom sowie das Abgaslambda stromaufwärts vor dem Katalysator berücksichtigt. Die Integration wird gestartet, wenn stromaufwärts vor dem Katalysator eine Lambdaänderungen auftritt, die beispielsweise gezielt vorgegeben werden kann. Die Integration wird beendet, wenn ein stromabwärts nach dem Katalysator angeordneter Lambdasensor die infolge der Lambdaänderung stromaufwärts vor dem Katalysator auftretende Änderung des Abgas-Lambdas detektiert.

Eine weitere Möglichkeit zur Diagnose eines in einem Abgasstrom angeordneten Katalysators sieht die Erfassung und Bewertung wenigstens einer zu beseitigenden Abgaskomponente unmittelbar vor. Ein entsprechendes Verfahren ist in der DE 199 63 901 A1 beschrieben. Ein stromabwärts nach einem NOx-Speicherkatalysator angeordneter NOx-empfindlicher Sensor stellt ein Maß für die NOx-Konzentration stromabwärts nach dem NOx-Speicherkatalysator bereit, das unmittelbar zur Diagnose des NOx-Speicherkatalysators herangezogen wird.

Aus der DE 43 38 342 A1 ist ein Verfahren zur Simulation eines Maßes für eine Abgastemperatur und/oder einer Abgassensor-Temperatur und/oder einer Katalysatortemperatur bekannt geworden, bei welchem neben Betriebskenngrößen einer Brennkraftmaschine wenigstens ein Flüssigkeitssignal berücksichtigt wird, das angibt, dass mit dem Auftreten von Flüssigkeit im Abgasbereich der Brennkraftmaschine und/oder im Katalysator zu rechnen ist. Bei der Simulation eines Maßes für die Temperatur wird die Verdampfung der Flüssigkeit berücksichtigt. Das vorbekannte Verfahren kann beispielsweise zur Steuerung einer elektrischen Heizung eines im Abgasbereich angeordneten Sensors herangezogen werden, bei welchem die Gefahr einer Zerstörung besteht, wenn eine Beheizung bei gleichzeitig vorliegendem Flüssigkeits-Niederschlag auf der Sensoroberfläche vorgesehen wird.

Bei der Flüssigkeit handelt es sich im Allgemeinen um Wasser, welches bei Unterschreiten der Taupunkt-Temperatur auf Oberflächen kondensiert. Aufgrund der im Abgasbereich einer Brennkraftmaschine herrschenden Bedingungen liegt die Taupunkt-Temperatur für Wasser niedriger als an der Umgebungsluft. Die Abweichungen beruhen zum einen darauf, dass die Wasserdampf-Konzentration im Abgas geringer ist als in der Umgebungsluft und zum anderen darauf, dass der Abgasdruck im Abgasbereich einer Brennkraftmaschine im Allgemeinen höher als der Umgebungs-Luftdruck ist

Aus der DE 100 65 125 A1 ist Weiterbildung der in der bereits genannten DE 43 38 342 A1 beschriebenen Vorgehensweise bekannt geworden, bei welcher neben dem Einfluss der Flüssigkeits-Verdampfung zusätzlich der Abtransport von kondensierter Flüssigkeit durch die Abgasströmung berücksichtigt wird.

In der DE 10 2005 041 661 (nicht vorveröffentlicht) ist ein Verfahren zum Betreiben eines Heizelements eines in einem Abgasbereich einer Brennkraftmaschine angeordneten keramischen Sensors beschrieben, wobei das Heizelement nur dann in Betrieb genommen wird, wenn sich die Brennkraftmaschine in einem Betriebszustand befindet, in welchem nicht damit zu rechnen ist, dass im Abgasbereich Flüssigkeit vorhanden ist. Auf das Vorhandensein dieses bestimmten Betriebszustands wird dann geschlossen, wenn der über eine Zeit summierte, vom Abgasmassenstrom getragene Wärmestrom eine vorgebbaren Schwellenwert überschreitet.

In der EP 1 291 502 A2 ist eine Brennkraftmaschine beschrieben, in deren Abgasbereich ein Reinigungskatalysator sowie ein HC-Adsorptionskatalysator angeordnet sind. Vorgesehen ist eine Diagnose des HC-Adsorptionskatalysators. Die Diagnose beruht auf einer Bewertung des Temperaturgradienten, sofern sich der HC-Adsorptionskatalysator in einem Temperaturbereich von 50°C bis 250°C befindet. Der Temperaturbereich ist derart gewählt, dass das im HC-Absorptionskatalysator eingelagerte Wasser verdampft, sodass der zur Bewertung vorgesehene Temperaturgradient ausschließlich auf der Verdampfung von im HC-Adsorptionskatalysator eingelagerten Kohlenwasserstoffen (HC) beruht, der sich deutlich von demjenigen Temperaturgradienten unterscheidet, der durch die Reinigungsfunktion des Reinigungskatalysators entsteht.

Der Erfindung liegt die Aufgabe zugrunde, ein Verfahren und eine Vorrichtung zur Diagnose eines in einem Abgasstrom angeordneten Katalysators anzugeben, die einfach zu realisieren sind und eine zuverlässige Diagnose ermöglichen.

Die Aufgabe wird durch die in den unabhängigen Ansprüchen angegebenen Merkmale gelöst.

### Offenbarung der Erfindung

Das erfindungsgemäße Verfahren zur Diagnose eines in einem Abgasstrom angeordneten Katalysators beruht auf einer Bewertung der hygroskopischen Eigenschaften des Katalysators.

Während bei freien Wasser-Oberflächen lediglich Kräfte zwischen den Wassermolekülen auftreten, die beim Verdampfung des Wassers überwunden werden müssen, spielen in Katalysatoren offensichtlich auch Wechselwirkungen zwischen der inneren Oberfläche des Katalysators und den Wassermolekülen eines auf der Oberfläche kondensierten Wasserfilms eine Rolle, die entweder zusätzlich auftreten oder stärker sein können als die Kräfte zwischen den Wassermolekülen. Unter den hygroskopischen Eigenschaften wird daher jede Art von Wechselwirkung zwischen der inneren Oberfläche eines Katalysators und eines darauf befindlichen Wassers verstanden. Das Wasser wird im Folgenden als Wasserfilm bezeichnet.

Die hygroskopischen Eigenschaften des Katalysators hängen mit der verfügbaren Katalysator-Oberfläche zusammen, welche proportional zur Aktivität des Katalysators ist. Das erfindungsgemäße Verfahren zur Diagnose des im Abgasstrom angeordneten Katalysators beruht daher indirekt auf der Ermittlung bzw. Bewertung eines Maßes für die wirksame Katalysator-Oberfläche, die als ein Maß für die Qualität des Katalysators herangezogen werden kann.

Vorteilhafte Weiterbildungen und Ausgestaltungen der erfindungsgemäßen Vorgehensweise ergeben sich aus abhängigen Ansprüchen.

Ein Ausführungsbeispiel zur Bewertung der hygroskopischen Eigenschaften des Katalysators sieht zunächst eine Messung eines Maßes für die Katalysator-Temperatur vor. Weiterhin wird die Bewertung einer Kenngröße eines gemessenen Temperatur-Plateaus vorgesehen, welches während der Verdampfung des gegebenenfalls im Katalysator vorhandenen Wasserfilms auftritt.

Der Wasserfilm-Verdampfungsprozess benötigt Energie, die von einer durch das Abgas eingetragenen Energie bereitzustellen ist. Daher bildet sich das Temperatur-Plateau so lange aus, bis der Wasserfilm verdampft ist.

Als Kenngröße des Temperatur-Plateaus wird vorzugsweise die Plateau-Temperatur selbst herangezogen. Anhand von Experimenten konnte gezeigt werden, dass bei einem guten Katalysator tendenziell eine höhere Plateau-Temperatur auftritt als bei einem schlechten Katalysator. Alternativ oder zusätzlich kann die Dauer des Temperatur-Plateaus berücksichtigt werden. Insbesondere, wenn die Abgastemperatur stromaufwärts vor dem Katalysator und/oder der durch den Katalysator strömende Abgasstrom während des Temperatur-Plateaus in einem Toleranzbereich liegen, kann die Dauer des Temperatur-Plateaus ebenfalls zur Diagnose des Katalysators herangezogen werden, wobei eine längere Dauer einem besseren Katalysator als eine kürzere Dauer entspricht.

Vorzugsweise wird der Toleranzbereich in Abhängigkeit vom Abgasstrom und/oder von der Abgastemperatur und/oder von der Temperatur einer Brennkraftmaschine, in deren Abgasbereich der Katalysator angeordnet ist, festgelegt, die bei Beginn der Erfassung des Temperatur-Plateaus vorliegen.

Der Katalysator ist beispielsweise - wie bereits erwähnt - im Abgasstrom einer Brennkraftmaschine angeordnet. Ausgestaltungen können vorsehen, dass die Katalysator-Diagnose nach einem Kaltstart der Brennkraftmaschine und/oder nach einer Schubabschaltung der Brennkraftmaschine und/oder nach dem Abschalten und der Wieder-Inbetriebnahme der Brennkraftmaschine vorgesehen wird. In diesen Betriebszuständen der Brennkraftmaschine kann davon ausgegangen werden, dass das Temperatur-Plateau auftritt, da zuvor eine Taupunktunterschreitung des im Abgasbereich vorhandenen Wasserdampfes voraussichtlich vorgelegen hat, die zum Auftreten eines kondensierten Wasserfilms führt.

Mit dem Auftreten des Temperatur-Plateaus kann in jedem Fall gerechnet werden, wenn eine Erfassung des Temperatur-Plateaus vorgesehen wird, nachdem die Katalysator-Temperatur unter eine Erwartungstemperatur für die Plateau-Temperatur gesunken ist. Sofern die Brennkraftmaschine weiterhin betrieben wird, kann davon ausgegangen werden, dass das Temperatur-Plateau wieder auftritt. Gemäß einer Weiterbildung dieser Ausgestaltung ist vorgesehen, dass die Erwartungstemperatur in Abhängigkeit vom Diagnoseergebnis adaptiert wird. Bei einem zuvor als gut beurteilten Katalysator kann eine höhere Erwartungstemperatur für die Plateau-Temperatur vorgegeben werden als bei einem als schlechter beurteilten Katalysator.

Die erfindungsgemäße Vorrichtung zur Diagnose eines in einem Abgasstrom angeordneten Katalysators betrifft zunächst ein Steuergerät, das speziell zur Durchführung des Verfahrens hergerichtet ist. Das Steuergerät enthält vorzugsweise wenigstens einen elektrischen Speicher, in welchem die Verfahrensschritte als Computerprogramm abgelegt sind.

Weitere vorteilhafte Weiterbildungen und Ausgestaltungen der erfindungsgemäßen Vorgehensweise ergeben sich aus weiteren abhängigen Ansprüchen und aus der folgenden Beschreibung

### Zeichnung

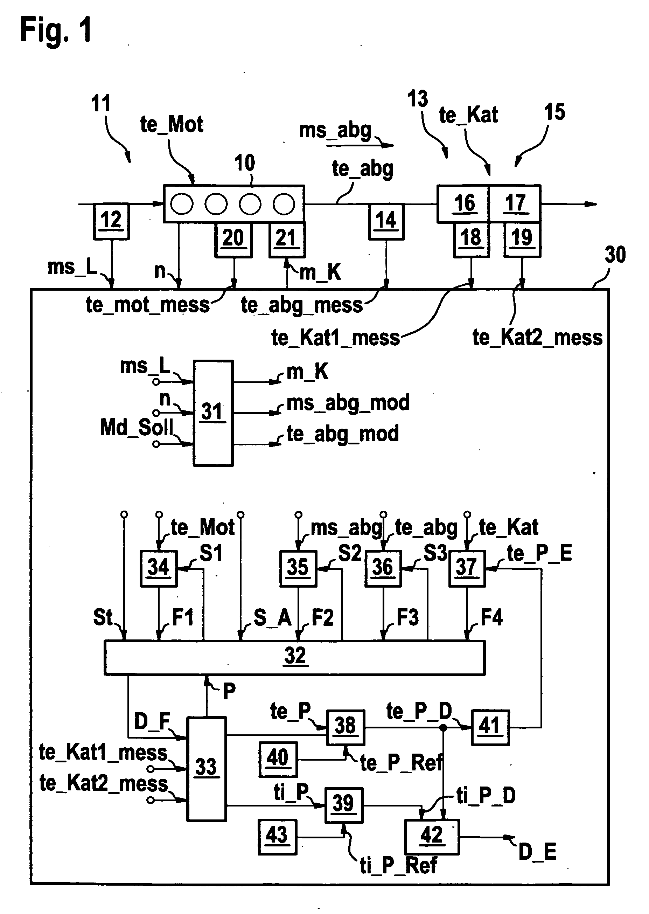

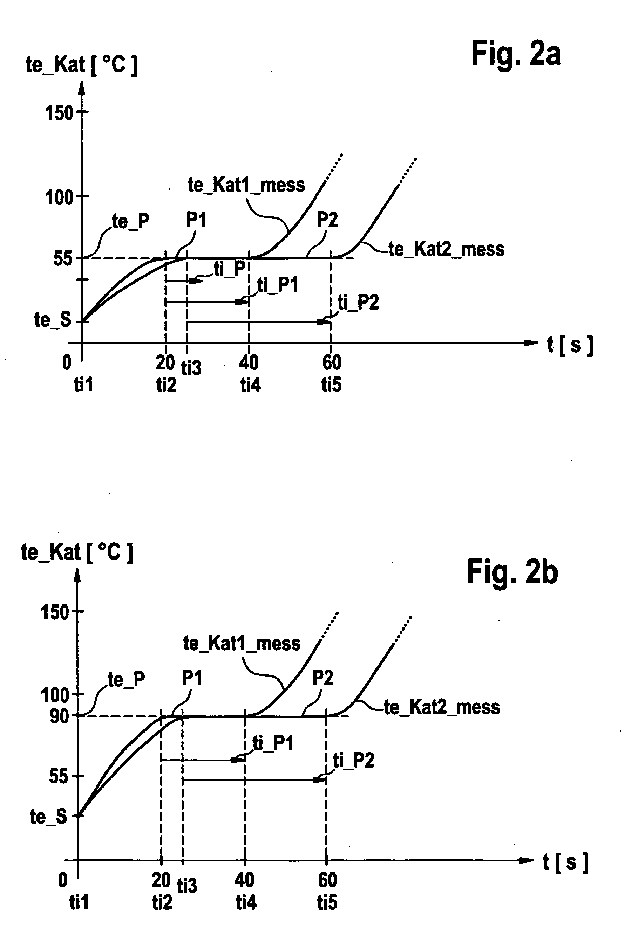

Figur 1 zeigt ein technisches Umfeld, in welchem ein erfindungsgemäße Verfahren zur Diagnose eines in einem Abgasstrom angeordneten Katalysators stattfindet, und die Figuren 2a, 2b zeigen Katalysatortemperaturen in Abhängigkeit von der Zeit.

Figur 1 zeigt eine Brennkraftmaschine 10, in deren Ansaugbereich 11 eine Lufterfassung 12 und in deren Abgasbereich 13 ein Abgas-Temperatursensor 14 sowie ein Katalysator 15 angeordnet sind. Der Katalysator 15 ist in einen ersten Katalysator-Teilbereich 16 und einen zweiten Katalysator-Teilbereich 17 aufgeteilt. Die Brennkraftmaschine 10 weist eine Motortemperatur te_mot auf.

Der Katalysator 15 weist eine Katalysatortemperatur te_Kat auf. Die Temperatur des ersten Katalysator-Teilbereichs 16 erfasst ein erster Katalysator-Temperatursensor 18 und die Temperatur des zweiten Katalysator-Teilbereichs 17 erfasst ein zweiter Katalysator-Temperatursensor 19.

Im Abgasbereich 13 tritt ein Abgasstrom ms_abg sowie stromaufwärts vor dem Katalysator 15 eine Abgastemperatur te_abg auf.

Der Brennkraftmaschine 10 ist ein Motor-Temperatursensor 20 sowie eine Kraftstoff-Zumessung 21 zugeordnet.

Die Lufterfassung 12 stellt einem Steuergerät 30 ein Luftsignal ms_L, die Brennkraftmaschine 10 eine Drehzahl n, der Motor-Temperatursensor 20 ein Motortemperatur-Messsignal te_mot_mess, der-Abgas-Temperatursensor 14 ein Abgastemperatur-Messsignal te_abg_mess, der erste Katalysator-Temperatursensor 18 ein erstes Katalysatortemperatur-Messsignal te_Kat1_mess und der zweite Katalysator-Temperatursensor 19 ein zweites Katalysatortemperatur-Messsignal te_Kat2_mess zur Verfügung. Das Steuergerät 30 stellt der Kraftstoff-Zumessung 21 ein Kraftstoffsignal m_K zur Verfügung.

Das Steuergerät 30 enthält eine Kraftstoffsignal-Festlegung 31, welcher das Luftsignal ms_L, die Drehzahl n sowie ein Drehmoment-Sollwert Md_Soll zur Verfügung gestellt werden und welche das Kraftstoffsignal m_K, ein berechnetes Maß ms_abg_mod für den Abgasstrom ms_abg sowie ein berechnetes Maß te_abg_mod für die Abgastemperatur te_abg zur Verfügung stellt.

Das Steuergerät 30 enthält weiterhin eine Diagnose-Freigabe 32, der ein Brennkraftmaschinen-Startsignal St, ein Schubabschaltungssignal S_A sowie ein erstes bis viertes Freigabesignal F1 - F4 zur Verfügung gestellt werden und die ein Diagnose-Freigabesignal D_F ermittelt, welches einer Temperatur-Plateau-Erfassung 33 zur Verfügung gestellt wird.

Das erste Freigabesignal F1 stellt ein erster Vergleicher 34 bereit, dem die Motortemperatur te_mot sowie ein Motortemperatur-Vergleichssignal S1 zur Verfügung gestellt werden. Das zweite Freigabesignal F2 stellt ein zweiter Vergleicher 35 bereit, dem der Abgasstrom ms_abg sowie ein Abgasstrom-Vergleichssignal S2 zur Verfügung gestellt werden. Das dritte Freigabesignal F3 stellt ein dritter Vergleicher 36 bereit, dem die Abgastemperatur te_abg sowie ein Abgastemperatur-Vergleichssignal S3 zur Verfügung gestellt werden. Das vierte Freigabesignal F4 stellt ein vierter Vergleicher 37 bereit, dem die Katalysatortemperatur te_Kat und ein Plateau-Temperatur-Erwartungswert te_P_E zur Verfügung gestellt werden. Das erste bis dritte Vergleichssignal S1 - S3 wird von der Diagnose-Freigabe 32 bereitgestellt.

Der Temperatur-Plateau-Erfassung 33 werden neben dem Diagnose-Freigabesignal D_F das erste Katalysatortemperatur-Messsignal te_Kat1_mess und das zweite Katalysatortemperatur-Messsignal te_Kat2_mess zur Verfügung gestellt. Die Temperatur-Plateau-Erfassung 33 gibt an die Diagnose-Freigabe 32 ein Plateau-Signal P ab.

Die Temperatur-Plateau-Erfassung 33 stellt einem Plateau-Temperatur-Vergleicher 38 eine Plateau-Temperatur te_P und einem Plateau-Dauer-Vergleicher 39 eine Plateau-Dauer ti_P zur Verfügung.

Dem Plateau-Temperatur-Vergleicher 38 wird weiterhin ein von einer Plateau-Temperatur-Referenzvorgabe 40 bereitgestellter Plateau-Temperatur-Referenzwert te_P_Ref zur Verfügung gestellt. Der Plateau-Temperatur-Vergleicher 38 stellt ein Plateau-Temperatur-Diagnosesignal te_P_D sowohl einer Plateau-Erwartungswert-Festlegung 41 als auch einer Diagnose-Ermittlung 42 zur Verfügung.

Dem Plateau-Dauer-Vergleicher 39 wird weiterhin ein von einer Plateau-Dauer-Referenzvorgabe 43 bereitgestellter Plateau-Dauer-Referenzwert ti_P_Ref zur Verfügung gestellt. Der Plateau-Dauer-Vergleicher 39 stellt ein Plateau-Dauer-Diagnosesignal ti_P_D der Diagnose-Ermittlung 42 zur Verfügung.

Die Diagnose-Ermittlung 42 gibt ein Diagnose-Ergebnis D_E aus.

Die Plateau-Erwartungswert-Festlegung 41 ermittelt den Plateau-Temperatur-Erwartungswert te_P_E.

Figur 2a zeigt die Katalysatortemperatur te_Kat in Abhängigkeit von der Zeit t. Gezeigt sind das erste und zweite Katalysatortemperatur-Messsignal te_Kat1_mess, te_Kat2_mess, die beide zu einem ersten Zeitpunkt ti1 mit einem Temperatur-Startwert te_S beginnen.

Beide Katalysatortemperatur-Messsignale te_Kat1_mess, te_Kat2_mess weisen Temperatur-Plateaus P1, P2 auf, bei welchem eine Plateau-Temperatur te_P auftritt, die beispielsweise bei 55 °C liegt. Die Temperatur-Plateaus P1, P2 weisen jeweils eine Plateau-Dauer ti_P auf.

Das erste Temperatur-Plateau P1 des ersten Katalysatortemperatur-Messsignals te_Kat1_mess weist eine erste Plateau-Dauer ti_P1 auf, die zu einem zweiten Zeitpunkt ti2 beginnt und die zu einem vierten Zeitpunkt ti4 endet. Das zweite Temperatur-Plateau P2 des zweiten Katalysatortemperatur-Messsignals te_Kat2_mess weist eine zweite Plateau-Dauer ti_P2 auf, die zu einem dritten Zeitpunkt ti3 beginnt und die zu einem fünften Zeitpunkt ti5 endet.

Figur 2b zeigt ebenfalls die Katalysatortemperatur te_Kat in Abhängigkeit von der Zeit t. Die beiden Katalysatortemperatur-Messsignale te_Kat1_mess, te_Kat2_mess weisen wieder jeweils ein Temperatur-Plateau P1, P2 auf, wobei die Plateau-Temperatur te_P bei beispielsweise 90 °C liegt.

Erfindungsgemäß wird folgendermaßen vorgegangen:

Die Kraftstoffsignal-Festlegung 31 legt das Kraftstoffsignal m_K beispielsweise in Abhängigkeit vom Luftsignal ms_L und/oder von der Drehzahl n und/oder dem Drehmoment-Sollwert Md_Soll fest. Der Drehmoment-Sollwert Md_Soll wird beispielsweise von einem nicht näher gezeigten Fahrpedal eines ebenfalls nicht näher gezeigten Kraftfahrzeugs bereitgestellt, in welchem die Brennkraftmaschine 10 als Antriebsmotor eingesetzt wird. Das Kraftstoffsignal m_K legt beispielsweise eine in die einzelnen Zylinder der Brennkraftmaschine 10 einzuspritzenden Kraftstoffmengen und die Einspritzzeitpunkte fest.

Die Kraftstoffsignal-Ermittlung 31 kann aufgrund der zur Verfügung stehenden Signale weiterhin das berechnete Maß ms_abg_mod für den Abgasstrom ms_abg sowie das berechnete Maß te_abg_mod für die Abgastemperatur te_abg stromaufwärts vor dem Katalysator 15 ermitteln. Alternativ oder zusätzlich kann die Abgastemperatur te_abg mit dem Abgas-Temperatursensor 14 gemessen werden, der das Abgastemperatur-Messsignal te_abg_mess bereitstellt.

Erfindungsgemäß ist eine Diagnose des Katalysators 15 vorgesehen, der im gezeigten Ausführungsbeispiel in die wenigstens zwei Katalysator-Teilbereiche 16, 17 aufgeteilt ist. Zur Durchführung der Diagnose ist eine Messung der Katalysatortemperatur te_Kat erforderlich. Aufgrund der Aufteilung in die wenigstens zwei Katalysator-Teilbereiche 16, 17 sind entsprechend die wenigstens zwei Katalysator-Temperatursensoren 18, 19 vorgesehen, welche das erste Katalysatortemperatur-Messsignal te_Kat1_mess bzw. das zweite Katalysator-Katalysatortemperatur-Messsignal te_Kat2_mess bereitstellen. Die Aufteilung in Teilbereiche 16, 17 ist nicht erforderlich. Prinzipiell reicht der Einsatz eines einzigen Katalysator-Temperatursensors, der beispielsweise im hinteren Teil des Katalysators 15 oder vorzugsweise stromabwärts nach dem Katalysator 15 angeordnet ist. Wesentlich ist die Bereitstellung eines gemessenen Signals, das zumindest ein Maß für die Katalysatortemperatur te_Kat des zu diagnostizierenden Katalysators 15 ist.

Erfindungsgemäß ist vorgesehen, dass die Katalysator-Diagnose auf einer Bewertung der hygroskopischen Eigenschaften des Katalysators 15 beruht. Unter den hygroskopischen Eigenschaften wird jede Wechselwirkung zwischen einem auf einer inneren Oberfläche des Katalysators 15 auftretendem Wasserfilm mit der Oberfläche verstanden, unabhängig vom physikalischen Effekt.

Während des Betriebs der Brennkraftmaschine 10 ist im Abgasbereich 13 stets mit dem Auftreten von Wasserdampf zu rechnen. Der Wasserdampf entsteht bei der Verbrennung des Luft-Kraftstoff-Gemischs in der Brennkraftmaschine 10. Weiterhin erfolgt ein Eintrag von Wasserdampf durch die Feuchtigkeit der von der Brennkraftmaschine 10 angesaugten Umgebungsluft. Die Wasserdampf-Konzentration im Abgasbereich 13 der Brennkraftmaschine 10 liegt bei etwa 12,5 %, wenn von einer geringen relativen Feuchtigkeit der von der Brennkraftmaschine 10 angesaugten Luft ausgegangen wird. Der im Abgas enthaltene Wasserdampf weist einen Abgas-Wasserdampfdruck auf, der von der Abgas-Wasserdampf-Konzentration und dem Abgasdruck abhängt.

Bei einer Taupunkt-Unterschreitung kann sich der im Abgas enthaltenen Wasserdampf auf kühlen Oberflächen im Abgasbereich 13 einschließlich des Katalysators 15 als Wasserfilm niederschlagen.

Wenn auf der inneren Oberfläche des Katalysators 15 ein Wasserfilm aufgrund einer Taupunkt-Unterschreitung vorliegt, treten im Übergangsbereich zwischen dem Wasserfilm und der Katalysator-Oberfläche Effekte auf, die nicht in allen Einzelheiten geklärt sind. Die Effekte beruhen auf einer Wechselwirkung zwischen den Molekülen des Wasserfilms untereinander und insbesondere mit der Katalysator-Oberfläche. Diese Effekte werden im Sinne der vorliegenden Anmeldung als hygroskopische Eigenschaften des Katalysators 15 bezeichnet. Die hygroskopischen Eigenschaften werden unter anderem durch Adsorption- und/oder Absorptionsvorgänge bestimmt. Denkbar ist auch, dass Kappilareffekte vorliegen. Möglicherweise spielen Oberflächenspannungen und/oder Anziehungskräfte zwischen dem Wasserfilm und der inneren Oberfläche des Katalysators 15 eine Rolle.

Ein Wasserfilm auf der inneren Oberfläche des Katalysators 15 weist einen Wasserfilm-Dampfdruck auf, der von der Wasserfilm-Temperatur abhängt. Im Folgenden wird davon ausgegangen, dass die Katalysatortemperatur te_Kat der Temperatur des Wasserfilms entspricht. Der Wasserfilm-Dampfdruck führt zu einem Verdampfen des Wasserfilms, während der Abgas-Wasserdampfdruck diesem Vorgang entgegenwirkt. Ein thermodynamisches Gleichgewicht existiert, wenn der Wasserfilm-Dampfdruck und der Abgas-Wasserdampfdruck gleich sind. Dann würde der Wasserfilm weder zunehmen noch verdampfen. Bei einer Abgas-Wasserdampf-Konzentration von 12,5 % und dem gegenüber dem Luftdruck erhöhten Abgasdruck liegt die Taupunkttemperatur des Wasserfilms bei ungefähr 55 °C, wenn von trockener angesaugter Umgebungsluft ausgegangen wird. Bei einer hohen relativen Feuchte der von der Brennkraftmaschine 10 angesaugten Umgebungsluft erhöht sich die Temperatur um ungefähr 5 °C, da sich auch die Abgas-Wasserdampf-Konzentration auf über 12,5 % erhöht.

Diese Temperatur stellt sich auch während der Verdampfung des Wasserfilms ein. Die Temperatur, die hier als Plateau-Temperatur te_P bezeichnet wird, ändert sich während der Verdampfung nur unwesentlich. Die Menge des verdampfenden Wasserfilms bzw. des kondensierenden Wasserdampfs pro Zeiteinheit ist direkt proportional zum Dampfdruck-Gradienten zwischen dem Wasserfilm und dem Abgas-Wasserdampf.

Ausgehend von der Start-Temperatur te_S, die im gezeigten Ausführungsbeispiel unterhalb der Plateau-Temperatur te_P liegt, wird durch die Erhöhung beispielsweise der Abgastemperatur te_abg während des Betriebs der Brennkraftmaschine 10 zum zweiten Zeitpunkt ti2 das erste Temperatur-Plateau P1 des ersten Teilbereichs 16 des Katalysators 15 erreicht, wobei die Plateau-Temperatur te_P im gezeigten Ausführungsbeispiel bei beispielsweise 55 °C liegt. Aufgrund der räumlichen Anordnung des zweiten Katalysator-Teilbereichs 17 stromabwärts nach dem ersten Katalysator-Teilbereich 16 wird das zweite Temperatur-Plateau P2 des zweiten Katalysator-Teilbereichs 17 nach dem zweiten Zeitpunkt ti2 erst zum dritten Zeitpunkt ti3 erreicht. Die Plateau-Temperatur te_P ist in beiden Katalysator-Teilbereichen 16, 17 gleich.

Ob ein Temperatur-Plateau P1, P2 vorliegt, wird von der Temperatur-Plateau-Erfassung 33 detektiert. Die Detektion beruht beispielsweise auf einer Betrachtung des Gradienten der Katalysatortemperatur te_Kat. Im gezeigten Ausführungsbeispiel werden das erste und zweite Katalysatortemperatur-Messsignal te_Kat1_mess, te_Kat2_mess getrennt bewertet.

Gemäß einer vorteilhaften Ausgestaltung ist vorgesehen, dass die Temperatur-Plateau-Erfassung 33 ein gegebenenfalls vorliegendes Temperatur-Plateau P1, P2 nur dann detektiert, wenn das Diagnose-Freigabesignal D_F vorliegt, welches von der Diagnose-Freigabe 32 bereitgestellt wird.

Das Diagnose-Freigabesignal D_F kann vom Startsignal St der Brennkraftmaschine 10 abhängen. Das Temperatur-Plateau P1, P2 tritt mit hoher Wahrscheinlichkeit nach einem Kaltstart der Brennkraftmaschine 10 oder nach einem Wiederstart der Brennkraftmaschine 10 auf. Längere Betriebspausen der Brennkraftmaschine 10, die zu einem Abkühlen des Katalysators 15 führen können, treten insbesondere auf, wenn die Brennkraftmaschine 10 in einem HybridFahrzeug angeordnet ist, bei welchem während des Fahrbetriebs ein Abschalten der Brennkraftmaschine 10 vorgesehen ist.

Weiterhin kann das Diagnose-Freigabesignal D_F von der Motortemperatur te_mot abhängen, die mit dem Motortemperatur-Vergleichssignal S1 im ersten Vergleicher 34 verglichen wird, welcher das erste Freigabesignal F1 in Abhängigkeit vom Vergleichsergebnis bereitstellt. Das Motortemperatur-Vergleichssignal S1 wird beispielsweise von der Diagnose-Freigabe 32 bereitgestellt. Es kann sich um einen Schwellenwert oder einen Toleranzbereich handeln.

Weiterhin kann das Schubabschaltungssignal S_A berücksichtigt werden. Das Schubabschaltungssignal S_A tritt auf, wenn während des Betriebs der Brennkraftmaschine 10 die Kraftstoffzufuhr vollständig unterdrückt wird. Während des Auftretens des Schubabschaltungssignal S_A findet kein Energieeintrag in den Abgasbereich 13 statt, sodass aufgrund des gleichzeitig vorliegenden gegebenenfalls vorliegenden hohen Luftdurchsatzes im Abgasbereich 13 der Katalysator 15 ausgekühlt wird bzw. die Katalysatortemperatur te_Kat zumindest nicht steigt.

Weiterhin kann der Abgasstrom ms_abg berücksichtigt werden. Der Abgasstrom ms_abg, der als Abgas-Volumenstrom oder vorzugsweise als AbgasMassenstrom vorliegen kann, wird im zweiten Vergleicher 35 mit dem Abgasstrom-Vergleichssignal S2 verglichen. Der zweite Vergleicher 35 stellt das zweite Freigabesignal F2 in Abhängigkeit vom Vergleichsergebnis bereit. Das Abgasstrom-Vergleichssignal S2 wird beispielsweise von der Diagnose-Freigabe 32 bereitgestellt. Es kann sich um einen Schwellenwert oder einen Toleranzbereich handeln.

Weiterhin kann die Abgastemperatur te_abg berücksichtigt werden. Herangezogen werden kann das berechnete Maß te_abg_mod der Abgastemperatur te_abg oder das vom Abgas-Temperatursensor 14 bereitgestellte Abgastemperatur-Messsignal te_abg_mess. Der dritte Vergleicher 36 vergleicht die Abgastemperatur te_abg mit dem Abgastemperatur-Vergleichssignal S3 und stellt in Abhängigkeit vom Vergleichsergebnis das dritte Freigabesignal F3 bereit. Das Abgastemperatur-Vergleichssignal S3 wird beispielsweise von der Diagnose-Freigabe 32 bereitgestellt. Es kann sich um einen Schwellenwert oder einen Toleranzbereich handeln.

Besonders vorteilhaft wird weiterhin die Katalysatortemperatur te_Kat berücksichtigt. Der vierte Vergleicher 37 vergleicht die Katalysatortemperatur te_Kat im gezeigten Ausführungsbeispiel mit dem Plateau-Temperatur-Erwartungswert te_P_E. Der Plateau-Temperatur-Erwartungswert te_P_E wird von der Plateau-Erwartungswert-Festlegung 41 entweder als Startwert oder als aus wenigstens einer vorangegangenen Diagnose adaptierter Wert zur Verfügung gestellt.

Die Temperatur-Plateau-Erfassung 36 ermittelt im gezeigten Ausführungsbeispiel sowohl die Plateau-Temperatur te_P als auch die Plateau-Dauer ti_P. Die Plateau-Dauer ti_P wird getrennt für den ersten Katalysator-Teilbereich 16 als erste Plateau-Dauer ti_P1 und für den zweiten Katalysator-Teilbereich 17 als zweite Plateau-Dauer ti_P2 ermittelt und bereitgestellt.

Im gezeigten Ausführungsbeispiel wird davon ausgegangen, dass die erste Plateau-Dauer ti_P1 zum zweiten Zeitpunkt ti2, beispielsweise bei 20 Sekunden, beginnt und zum vierten Zeitpunkt ti4, beispielsweise bei 40 Sekunden, endet. Im gezeigten Ausführungsbeispiel wird weiterhin davon ausgegangen, dass die zweite Plateau-Dauer ti_P2 zum dritten Zeitpunkt ti3, beispielsweise bei 25 Sekunden, beginnt und zum fünften Zeitpunkt ti5, beispielsweise bei 60 Sekunden, endet. Wesentlich ist, dass die Plateau-Temperatur te_P der beiden Temperatur-Plateaus P1, P2 wenigstens näherungsweise gleich ist. Die Plateau-Temperatur te_P liegt gemäß dem Ausführungsbeispiel in Figur 2a bei beispielsweise 55 °C und in Figur 2b bei beispielsweise 90 °C.

Die Plateau-Temperatur-Erfassung 33 stellt während der Detektion eines Temperatur-Plateaus P1, P2 der Diagnose-Freigabe 32 das Plateausignal P zur Verfügung, die in Abhängigkeit vom vorliegenden Plateausignal P das erste bis dritte Vergleichssignal S1 - S3 festlegen kann. Vorzugsweise wird mit dem Auftreten des Plateausignals P, das den Beginn eines Temperatur-Plateaus P1, P2 zum zweiten bzw. dritten Zeitpunkt ti2, ti3 signalisiert, wenigstens eines der ersten bis dritten Vergleichssignale S1 - S3 als Toleranzbereich vorgegeben, sodass die weitere Ermittlung des Temperatur-Plateaus P1, P2, insbesondere die Ermittlung der Plateau-Dauer ti_P nur weitergeführt wird, wenn die Eingangsgrößen im Toleranzbereich liegen. Ansonsten wird abgebrochen, da insbesondere ein Energieeintrag in den Katalysator 15 in die Plateau-Dauer ti_P eingeht. Der Einfluss auf die Plateau-Temperatur te_P wurde experimentell als gering festgestellt.

Experimentell wurde weiterhin festgestellt, dass sich die hygroskopischen Eigenschaften des Katalysators 15 zumindest in unterschiedlichen Plateau-Temperaturen te_P bzw. unterschiedlichen Plateau-Dauern ti_P widerspiegeln. Hierbei wurde festgestellt, dass eine höhere Plateau-Temperatur te_P einem besseren Katalysator 15 und eine niedrigere Plateau-Temperatur te_P entsprechend einem schlechteren Katalysator zu 15 zugeordnet werden kann.

Der in Figur 2a gezeigte zeitliche Verlauf der Katalysatortemperatur te_Kat in Abhängigkeit von der Zeit t entspricht demgemäß einem vergleichsweise schlechteren Katalysator 15, während der in Figur 2b gezeigte zeitliche Verlauf der Katalysatortemperatur te_Kat in Abhängigkeit von der Zeit t einem besseren Katalysator 15 entspricht. Entsprechend entspricht eine längere Plateau-Dauer ti_P einem besseren Katalysator 15 als eine kürzere Plateau-Dauer ti_P.

Die Auswirkungen der Wechselwirkungen zwischen dem Wasserfilm und der inneren Oberfläche des Katalysators 15 scheinen wenigstens näherungsweise proportional zur aktiven Oberfläche im Katalysator 15 zu sein. Je größer die aktive Oberfläche des Katalysators 15 noch ist, desto besser ist die katalytische Wirkung. Es wird davon ausgegangen, dass bei einer hohen Plateau-Temperatur te_P bzw. bei einer langen Plateau-Dauer ti_P eine größere aktive Oberfläche zur Verfügung steht und deshalb das Konvertierungsvermögen des Katalysators 15 besser ist als bei niedrigen Plateau-Temperaturen te_P bzw. kurzen Plateau-Dauern ti_P.

Die Plateau-Temperatur te_P wird im Plateau-Temperatur-Vergleicher 38 mit dem Plateau-Temperatur-Referenzwert te_P_Ref verglichen, welchen die Plateau-Temperatur-Referenzvorgabe 40 bereitstellt. Anhand eines oder vorzugsweise mehreren Vergleichen der Plateau-Temperatur te_P mit vorzugsweise mehreren Plateau-Temperatur-Referenzwerten te_P_Ref erfolgt eine Einstufung des Katalysators 15 mit dem Plateau-Temperatur-Diagnosesignal te_P_D. Die Plateau-Temperatur-Referenzwerte te_P_Ref werden beispielsweise für jeden Katalysatortyp separat festgelegt.

Entsprechend wird die Plateau-Dauer ti_P im Plateau-Dauer-Vergleicher 39 mit dem Plateau-Dauer-Referenzwert ti_P_D verglichen, welchen die Plateau-Dauer-Referenzvorgabe 43 bereitstellt. Anhand eines oder vorzugsweise mehreren Vergleichen der Plateau-Dauer ti_P mit vorzugsweise mehreren Plateau-Dauer-Referenzwerten te_P_Ref erfolgt eine Einstufung des Katalysators mit dem Plateau-Dauer-Diagnosesignal ti_P_D. Auch die Plateau-Dauer-Referenzwerte te_P_Ref werden beispielsweise für jeden Katalysatortyp separat festgelegt.

Aus dem Plateau-Temperatur-Diagnosesignal te_P_D und/oder dem Plateau-Dauer-Diagnosesignal ti_P_D ermittelt die Diagnose-Ermittlung 42 endgültig das Diagnosesignal D_E, das eine Aussage über das Konvertierungsvermögen des Katalysators 15 zulässt. Durch Vergleich mit dem Konvertierungsvermögen eines Grenzkatalysators kann das Diagnosesignal D_E als Hinweis zu einem erforderlichen Austausch des Katalysators 15 herangezogen werden.

Das Plateau-Temperatur-Diagnosesignal te_P_D wird weiterhin der Plateau-Erwartungswert-Festlegung 41 zur Verfügung gestellt, damit der Plateau-Temperatur-Erwartungswert te_P_E an den aktuellen Zustand des Katalysators 15 adaptiert werden kann.

Die Aufteilung des Katalysators 15 in wenigstens den ersten und zweiten Katalysator-Teilbereich 16, 17, der entsprechend getrennt bewertet werden kann, ermöglicht die Bereitstellung einer zusätzlichen Informationen über das örtliche Auftreten einer Änderung der Konvertierungseigenschaften des Katalysators 15. Weiterhin kann aufgrund eines Vergleichs der Diagnoseergebnisse der beiden Katalysator-Teilbereiche 16, 17 die Plausibilität hinsichtlich der Bereitstellung der Katalysatortemperatur-Messsignale te_Kat1_mess,te_Kat2_mess bzw. der weiteren Signalverarbeitung überprüft werden.

## Patentansprüche

1. Verfahren zur Diagnose eines in einem Abgasstrom (ms_abg) angeordneten Katalysators (15,16, 17), die auf einer Bewertung der hygroskopischen Eigenschaften des Katalysators (15,16, 17) beruht, bei dem eine Messung eines Maßes (te_Kat1_mess, te_Kat2_mess) für die Katalysator-Temperatur (te_Kat) vorgesehen wird, **dadurch gekennzeichnet, dass** ein Vorliegen eines Temperatur-Plateaus (P1, P2) detektiert wird, welches während der Verdampfung eines im Katalysator (15, 16, 17) vorhandenem Wasserfilms auftritt, dass bei einem detektierten Temperatur-Plateau (P1, P2) die gemessene Katalysator-Temperatur (te_Kat), entsprechend der Plateau-Temperatur (te_P) erfasst wird, wobei einer höheren Plateau-Temperatur (te_P) ein besserer Katalysator (15,16,17) zugeordnet wird als einer niedrigeren Plateau-Temperatur (te_P).

2. Verfahren nach Anspruch 1, **dadurch gekennzeichnet, dass** zusätzlich die Plateau-Dauer (ti_P, ti_P1, ti_P2) zur Diagnose herangezogen wird.

3. Verfahren nach Anspruch 2, **dadurch gekennzeichnet, dass** die Plateau-Dauer (ti_P, ti_P1, ti_P2) des Temperatur-Plateaus (P1, P2) nur erfasst wird, wenn der Abgasstrom (ms_abg) und/oder die Abgastemperatur (te_abg) stromaufwärts vor dem Katalysator (15, 16, 17)) und/oder die Temperatur (te_mot) einer Brennkraftmaschine (10), in deren Abgasbereich (13) der Katalysator (15, 16, 17) angeordnet ist, während der Plateau-Erfassung in einem Toleranzbereich liegt.

4. Verfahren nach Anspruch 3, **dadurch gekennzeichnet, dass** der Toleranzbereich in Abhängigkeit vom Abgasstrom (ms_abg) und/oder von der Abgastemperatur (te_abg) und/oder der Temperatur (te_mot) der Brennkraftmaschine (10) zu Beginn der Erfassung des Temperatur-Plateaus (P1, ti_P1) abhängt.

5. Verfahren nach Anspruch 1, **dadurch gekennzeichnet, dass** die Katalysator-Diagnose nach einem Kaltstart einer Brennkraftmaschine (10), in deren Abgasbereich (13) der Katalysator (15, 16,17) angeordnet ist, vorgesehen wird.

6. Verfahren nach Anspruch 1, **dadurch gekennzeichnet, dass** die Katalysator-Diagnose nach einer Schubabschaltung (S_A) einer Brennkraftmaschine (10), in deren Abgasbereich (13) der Katalysator (15, 16, 17) angeordnet ist, vorgesehen wird.

7. Verfahren nach Anspruch 1, **dadurch gekennzeichnet, dass** die Katalysator-Diagnose nach dem Abschalten und der Wieder-Inbetriebnahme (St) einer Brennkraftmaschine (10), in deren Abgasbereich (13) der Katalysator (15, 16, 17) angeordnet ist, vorgesehen wird.

8. Verfahren nach Anspruch 1, **dadurch gekennzeichnet, dass** die Katalysator-Diagnose vorgesehen wird, wenn der Abgasstrom (ms_abg) unter einem Schwellenwert (S2) liegt.

9. Verfahren nach Anspruch 1, **dadurch gekennzeichnet, dass** der Katalysator in wenigstens zwei Katalysator-Teilbereiche (16, 17) aufgeteilt wird und dass die Katalysator-Diagnose für jeden Katalysator-Teilbereich (16, 17) getrennt erfolgt.

10. Verfahren nach Anspruch 1, **dadurch gekennzeichnet, dass** eine Einstufung des Katalysators (15, 16, 17) durch Vergleich der Plateau-Temperatur (te_P) mit einem oder mehreren Plateau-Temperatur-Referenzwerten (te_P_Ref) vorgenommen wird.

11. Vorrichtung zur Diagnose eines in einem Abgasstrom (ms_abg) angeordneten Katalysators (15, 16,17), **dadurch gekennzeichnet, dass** zumindest ein zur Durchführung des Verfahrens nach einem der vorhergehenden Ansprüche hergerichtetes Steuergerät (30) vorgesehen ist.

## Claims

1. Method for the diagnosis of a catalytic converter (15, 16, 17) located in an exhaust-gas flow (ms_abg), which diagnosis is based on an evaluation of the hygroscopic properties of the catalytic converter (15, 16, 17), in which method a measurement of a value (te_Kat1_mess, te_Kat2_mess) for the catalytic converter temperature (te_Kat) is carried out, **characterized in that** the presence of a temperature plateau (P1, P2) occurring during the evaporation of a water film which is present in the catalytic converter (15, 16, 17) is detected, **in that**, in the event of a temperature plateau (P1, P2) being detected, the measured catalytic converter temperature (te_Kat) corresponding to the plateau temperature (te_P) is detected, with a higher plateau temperature (te_P) being attributed to a better catalytic converter (15, 16, 17) than a lower plateau temperature (te_P).

2. Method according to Claim 1, **characterized in that** the plateau duration (ti_P, ti_P1, ti_P2) is additionally taken into consideration for the diagnosis.

3. Method according to Claim 2, **characterized in that** the plateau duration (ti_P, ti_P1, ti_P2) of the temperature plateau (P1, P2) is detected only if the exhaust-gas flow (ms_abg) and/or the exhaust-gas temperature (te_abg) upstream of the catalytic converter (15, 16, 17) and/or the temperature (te_mot) of an internal combustion engine (10), in whose exhaust-gas region (13) the catalytic converter (15, 16, 17) is arranged, lies in a tolerance range during the plateau detection.

4. Method according to Claim 3, **characterized in that** the tolerance range is dependent on the exhaust-gas flow (ms_abg) and/or on the exhaust-gas temperature (te_abg) and/or on the temperature (te_mot) of the internal combustion engine (10) at the start of the detection of the temperature plateau (P1, ti_P1).

5. Method according to Claim 1, **characterized in that** the catalytic converter diagnosis is carried out after a cold start of an internal combustion engine (10) in whose exhaust-gas region (13) the catalytic converter (15, 16, 17) is arranged.

6. Method according to Claim 1, **characterized in that** the catalytic converter diagnosis is carried out after an overrun cut-off (S_A) of an internal combustion engine (10) in whose exhaust-gas region (13) the catalytic converter (15, 16, 17) is arranged.

7. Method according to Claim 1, **characterized in that** the catalytic converter diagnosis is carried out after the shut-down and restart (St) of an internal combustion engine (10) in whose exhaust-gas region (13) the catalytic converter (15, 16, 17) is arranged.

8. Method according to Claim 1, **characterized in that** the catalytic converter diagnosis is carried out if the exhaust-gas flow (ms_abg) lies below a threshold value (S2).

9. Method according to Claim 1, **characterized in that** the catalytic converter is divided into at least two catalytic converter partial regions (16, 17) and **in that** the catalytic converter diagnosis is carried out separately for each catalytic converter partial region (16, 17).

10. Method according to Claim 1, **characterized in that** a categorization of the catalytic converter (15, 16, 17) is carried out by comparing the plateau temperature (te_P) with one or more plateau temperature reference values (te_P_Ref).

11. Device for the diagnosis of a catalytic converter (15, 16, 17) located in an exhaust-gas flow (ms_abg), **characterized in that** at least one control unit (30) which is set up to carry out the method according to at least one of the preceding claims is provided.

## Revendications

1. Procédé de diagnostic pour un catalyseur (15, 16, 17) disposé dans un flux de gaz d'échappement (ms_abg), qui repose sur une analyse des propriétés hygroscopiques du catalyseur (15, 16, 17), dans lequel une mesure d'une dimension (te_Kat1_mess, te_Kat2_mess) pour la température du catalyseur (te_Kat) est prévue, **caractérisé en ce que** l'on détecte la présence d'un plateau de température (P1, P2), qui se produit pendant l'évaporation d'un film d'eau présent dans le catalyseur (15, 16, 17), **en ce que**, si un plateau de température (P1, P2) est détecté, la température du catalyseur mesurée (te_Kat), correspondant à la température de plateau (te_P), est détectée, et l'on associe à une température de plateau (te_P) supérieure un meilleur catalyseur (15, 16, 17) qu'à une température de plateau (te_P) inférieure.

2. Procédé selon la revendication 1, **caractérisé en ce que** de plus, la durée du plateau (ti_P, ti_P1, ti_P2) est utilisée pour le diagnostic.

3. Procédé selon la revendication 2, **caractérisé en ce que** la durée du plateau (ti_P, ti_P1, ti_P2) du plateau de température (P1, P2) n'est détectée que lorsque le flux de gaz d'échappement (ms_abg) et/ou la température de gaz d'échappement (te_abg) en amont du catalyseur (15, 16, 17) et/ou la température (te_mot) d'un moteur à combustion interne (10), dans la région d'échappement (13) duquel est disposé le catalyseur (15, 16, 17), se situe dans une plage de tolérance pendant la détection du plateau.

4. Procédé selon la revendication 3, **caractérisé en ce que** la plage de tolérance est déterminée en fonction du flux de gaz d'échappement (ms_abg) et/ou de la température de gaz d'échappement (te_abg) et/ou de la température (te_mot) du moteur à combustion interne (10) au début de la détection du plateau de température (P1, ti_P1).

5. Procédé selon la revendication 1, **caractérisé en ce que** le diagnostic pour le catalyseur est prévu après un démarrage à froid d'un moteur à combustion interne (10), dans la région d'échappement duquel (13) est disposé le catalyseur (15, 16, 17).

6. Procédé selon la revendication 1, **caractérisé en ce que** le diagnostic pour le catalyseur est prévu après une commutation en mode de poussée (S_A) d'un moteur à combustion interne (10), dans la région d'échappement (13) duquel est disposé le catalyseur (15, 16, 17).

7. Procédé selon la revendication 1, **caractérisé en ce que** le diagnostic pour le catalyseur est prévu après l'arrêt et la remise en route (Section transversale) d'un moteur à combustion interne (10), dans la région d'échappement (13) duquel est disposé le catalyseur (15, 16, 17).

8. Procédé selon la revendication 1, **caractérisé en ce que** le diagnostic pour le catalyseur est prévu lorsque le flux de gaz d'échappement (ms_abg) est inférieur à une valeur de seuil (S2).

9. Procédé selon la revendication 1, **caractérisé en ce que** le catalyseur est divisé en au moins deux régions partielles de catalyseur (16, 17), et **en ce que** le diagnostic pour le catalyseur s'effectue séparément pour chaque région partielle de catalyseur (16, 17).

10. Procédé selon la revendication 1, **caractérisé en ce que** l'on effectue un classement du catalyseur (15, 16, 17) par comparaison de la température de plateau (te_P) avec une ou plusieurs valeurs de référence de température de plateau (te_P_Ref).

11. Dispositif pour le diagnostic pour un catalyseur (15, 16, 17) disposé dans un flux de gaz d'échappement (ms-abg), **caractérisé en ce que** l'on prévoit au moins un appareil de commande (30) prévu pour mettre en oeuvre le procédé selon l'une quelconque des revendications précédentes.
